Europäisches Patentamt

European Patent Office

Office européen des brevets

(11) Publication number: **0 234 568**
**A2**

# (12) EUROPEAN PATENT APPLICATION

(21) Application number: **87102655.5**

(22) Date of filing: **25.02.87**

(51) Int. Cl.⁴: **B23C 3/35**

(30) Priority: **28.02.86 IT 8410986**

(43) Date of publication of application:
**02.09.87 Bulletin 87/36**

(84) Designated Contracting States:
**AT BE CH DE ES FR GB GR IT LI LU NL SE**

(71) Applicant: **SILCA S.p.A.**
**Via Podgora, 20 Zona Industriale**
**I-31029 Vittorio Veneto (Treviso)(IT)**

(72) Inventor: **Bianchi, Camillo**
**Via Podgora, 20 Zona Industriale**
**I-31029 Vittorio Veneto (Treviso)(IT)**

(74) Representative: **Piovesana, Paolo**
**Corso del Popolo, 70**
**I-30172 Venezia-Mestre(IT)**

(54) **Key duplicating machine, particularly for bitted keys.**

(57) A key duplicating machine, particularly for bitted keys, comprising, for the original key and for the blank key respectively, two clamps mounted on a carriage mobile horizontally in all directions about a confronting cutter unit in which there are provided two feelers arranged to sense the notches present in the edges of the bit of the original key and two cutters arranged to reproduce these notches in the corresponding edges of the bit of the blank key. The machine comprises a cross-table (20) on which the clamps (24, 25) for the two keys are mounted, this table being slidable along horizontal parallel guides - (33) supported at their ends by two pairs of parallel connecting rods (34) and being mobile horizontally in all directions under the control of a horizontal lever (44), and further characterised in that the cutter unit (2) is mobile vertically through a distance at least corresponding to the maximum vertical travel of said cross-table (20) in moving orthogonal to said parallel guides (33).

FIG.1

This invention relates to a key duplicating machine, particularly for bitted keys.

Key duplicating machines are known, machines able to ascertain a certain pattern present on the original key and to reproduce it in pratically identical form on a blank key.

Known duplicating machines are normally provided with a carriage on which two clamps, for the original key and for the blank key to be cut respectively, are mounted side by side. The carriage can be moved with horizontal translational motion in front of the duplicator device, which comprises a feeler for sensing the pattern present on the original key, and a cutter for reproducing this pattern on the blank key.

Among the keys which can be reproduced on duplicating machines there are keys for special uses (safes, armoured doors, gates, etc.) know as bitted keys, which consist of a cylindrical shank carrying at one end an annular grip or head, and at the other end one or more metal plates (or bits) projecting radially from said shank and carrying a series of notches, the shape, arrangement and combination of which constitute the key pattern.

In addition to the more usual types of single-bitted and double-bitted keys, which comprise a plurality of notches in only the longitudinal edge of the bit (the edge parallel to the shank axis), there are other more sophisticated types of bitted keys in which the notches are also provided in the transverse edges of the bit. Whereas the former notches are cut by a cutter rotating about an axis parallel to the shank axis, the latter have to be cut by a cutter rotating about an axis orthogonal to the shank axis.

The present invention relates essentially to duplicating machines for bitted keys in which the pattern is provided both on the longitudinal edge and on the transverse edges orthogonal to this latter.

Duplicating machines for this particular use are already known. They comprise a base on which a motor is mounted to rotate two cutters for cutting the two different types of notch. On the same base there is mounted a clamp support carriage mobile horizontally in the two orthogonal directions, these movements being controlled by a pair of handwheels by way of conventional screw system.

A serious drawback of known duplicating machines is that they do not allow reproduction of the curvature normally provided in the longitudinal edge of the bit, and which can have a radius less than the distance between said edge and said axis. This operation must therefore be effected manually, with all the resultant drawbacks, slowness and imprecision of this type of operation.

A further drawback is that operating the clamp support carriage by the two handwheels is uncomfortable, slow and imprecise. A further drawback is the high cost of construction a carriage mobile in the horizontal plane by screw system, a cost which does not correspond to the degree of reliability obtainable.

An object of the invention is to obviate these drawbacks by providing a key duplicating machine, particularly for bitted keys, which combines operational simplicity with easy manoeuvrability and the possibility of reproducing on the copy key the same curvature as the longitudinal edge of the bit of the original key, even if this curvature has a radius less than the difference between said and the shank axis.

A further object of the invention is to provide a duplicating machine of the aforesaid type which enables the cutters to always work under optimun operating condition. In this respect, it should be noted that the dimensions of the cutter which operates on the longitudinal edge of the bit represent a compromise between its cost (proportionally higher the smaller its diameter) and its size, whereas the cutter which operates on the transverse edges of the bit must necessarily be of more limited dimensions because of the particular position in which it has to operate. The result is that the two cutters, which are of different diameter but driven by the same motor, rotate at different peripheral speeds and cannot both operate under ideal working conditions.

A further object of the invention is to provide a duplicating machine which enables keys to be cut without pratically any limit on their length. In contrast, in most known duplicating machines the distance between the two clamps limits the maximum length of the keys to be cut to below current requirements, which for this type of key involve lengths which can exceed 300 mm.

These and further objects which will be more apparent from the description given hereinafter are attained according to the invention by a key duplicating machine, particulary for bitted keys, comprising, for the original key and for the blank key respectively, two clamps mounted on a carriage mobile horizontally in all directions about a confronting cutter unit in which there are provided two feelers arranged to sense the patterns present in the edges of the bit of the original key and two cutters arranged to reproduce these patterns in the corresponding edges of the bit of the blank key, characterised by comprising a cross-table on which the clamps for the keys are mounted, this table being slidable along horizontal parallel connecting rods and being mobile horizontally in all directions under the control of a horizontal lever, and further characterised in that the cutter unit is mobile vertically through a distance at least corresponding to the maximum vertical travel of said cross-table in moving orthogonal to said parallel guides.

A preferred embodiment of the present invention is described in detail hereinafter with reference to the accompanying drawings, in which:

Figure 1 is a diagrammatic perspective view of a duplicating machine according to the invention;

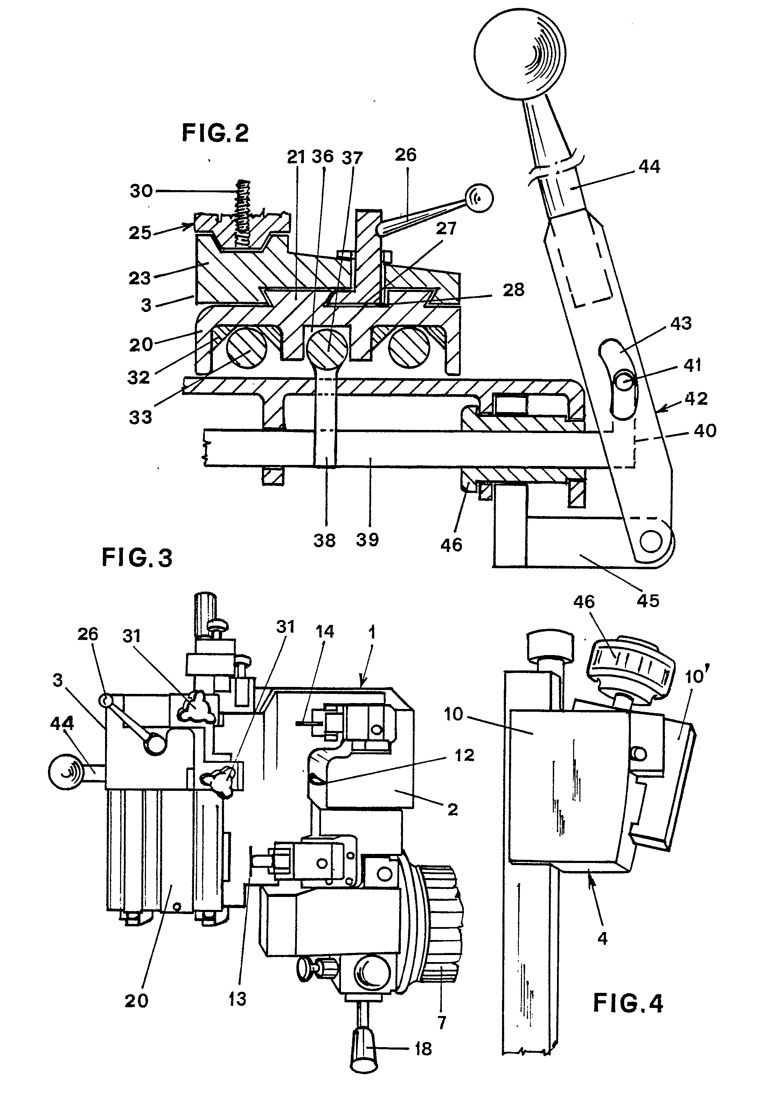

Figure 2 is a partial diagrammatic cross-section therethrough;

Figure 3 is a plan view thereof; and

Figure 4 is an enlarged side view of a detail of a head lock.

As can be seen from the figures, the duplicating machine according to the invention comprises substantially a base 1, on which a cutter unit 2 and a clamp support carriage 3 are mounted.

The cutter unit 2 is mobile vertically along a column 5, guided by an upright 6 rigid with the base 1.

On the cutter unit 2 there is mounted an electric motor 7 of horizontal axis, its output shaft 8 being rigid with a cutter 9 of hardened steel.

With the shaft 8 there is also associated a step-down gear unit which transmits motion to a horizontal shaft 11 orthogonal to the shaft 8 and carrying at its outer end a cutter 12 of greater diameter than the cutter 9.

The step-down ratio of the step-down gear unit is equal to the ratio of the diameters of the cutters 12 and 9, and consequently the peripheral speeds of the two cutters 9 and 12 are practically equal.

Two feelers 13, 14 are also mounted on the cutter unit 2. The feeler 13 is formed from a substantially rectangular plate disposed parallel to the plane of the cutter 9 and having its minor side equal in size to the diameter of this latter. The cutter 14 is formed from a plate disposed parallel to the cutter 12 and having that profile which faces the clamp support carriage curved with a radius of curvature equal to the radius of the cutter 12.

From the cutter unit 2 there emerges a pin 15 on which there is pivoted a tie bar 16 having its lower end hinged to a control lever 17 operated by a rod 18.

A preloaded spiral spring 19 interposed between the base 1 and cutter 2 opposes the lowering of said unit towards said base.

The clamp support carriage 3 comprises a cross-table 20, the upper surface of which comprises a substantially dovetail guide 21 engaged in a corresponding slot 22 provided in the lower structure of a support turret 23 for the clamps 24 and 25 which clamp the original key and blank key respectively.

On the turret 23 there is provided a lever 26 for operating a cam 27 engaged in a corresponding slot 28 provided in the cross-table 20 and extending parallel and adjacent to the guide 12.

Each clamp 24, 25 comprise a pair of jaws 29 mounted on a pin 30 and kept essentially spaced apart but approachable by screwing down a knob 31 provided on said pin 30.

The two clamps 24, 25 are disposed at different heights.

Specifically, the difference in level between the two gripping planes of the relative clamps corresponds to the difference in level between the axis of the cutters 9, 12 and the barycentre of the feelers 13, 14.

The lower surface of the cross-table 20 comprises two trapezoidal slots 32, in which there slide corresponding horizontal guide bars 33 hinged at both ends to connecting rods 34 which are pivoted lowerly on horizontal pins 35 connected to the base 1.

The lower surface of the cross-table 20 also comprises a seat 36 in which a ball 37 mounted on the upper end of an arm 38 engages. The arm 38 is connected lowerly to a horizontal shaft to which an upwardly facing support 40 comprising a horizontal pin 41 is fixed.

The support 40 is disposed within a fork 42, the prongs of which comprise slotted holes 43 for engaging the pin 41.

An operating level 44 is rigidly mounted on the upper end of the fork 42, and a plate 54 rigid with a bush 46 surrounding the shaft 39 is hinged to the lower end of the fork.

On the turret 23 there are also mounted two head locking clamps 4, each comprising a fixed jaw 10' hinged to this latter. In the mobile jaw 10' there engages a screw 46 provided with an operating knob and acting by way of its end against the fixed jaw 10 to cause clamping of the interposed head of the corresponding key. Each head locking clamp 4 is obviously aligned longitudinally with the corresponding clamp 24, 25.

The operation of the duplicating machine according to the invention is as follows:
the key to be duplicated and the blank key are clamped with their shank between the jaws 29 of the clamps 24 and 25, so that the relative bits are disposed perfectly horizontal and with their longitudinal edge facing the feeler 14 and the cutter 12 respectively. During this stage, care must be taken that the distance between corresponding points of the two keys is equal to the distance between the feeler 14 and cutter 12.

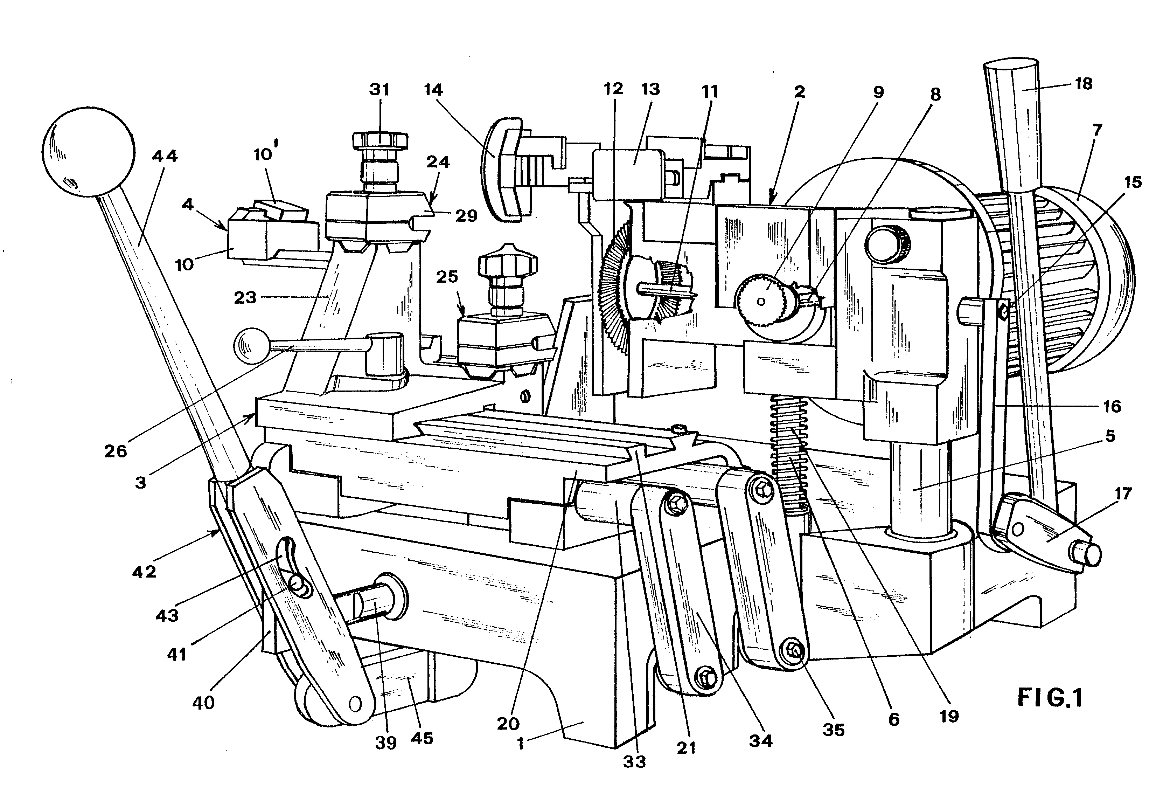

The motor 7 is then started, and the lever 26 operated to disengage the cam 27 from the slot 28. In this manner it is possible to manually move the turret 23 to that end of the cross-table corresponding to the position in which the bit of the blank key is facing the cutter 12. Further operation of the lever 26 locks the turret 23 on the cross-table 20 in this position (to the left in Figure 1).

The lever 44 is then moved forwards to axially move the shaft 39 by way of the fork 42 and support 40. As a result of this movement, the arm 38 rigid with the shaft 39 causes the cross-table 20 to move in the direction of the cutter unit 2 until the lower edge of the feeler 14 touches the base of the first notch of the key to be duplicated.

The cutter unit 2 is then lowered by the lever 18 so that the notch of the key to be duplicated slides along the curved profile of the feeler 14. Slight pressure must obviously be exerted on the lever 44 so that the key to be duplicated always remains in contact with the feeler 14. During this stage, the cutter 12 cuts the first notch in the bit of the blank key.

When this first notch has been cut, the cutter unit 2 is again raised to its initial position. Then again operating the lever 44, the cross-table 20 is moved slightly on the bars 33 until the feeler 14 is positioned in correspondence with the next notch in the key.

At this point, the operations described heretofore are repeated, and so on for all the notches of the longitudinal edge of the bit.

If the bit of the key to be reproduced is also provided with notches in its transverse edges, the cam 27 is released and the turret 23 is slid along the guides 21 until the feeler 13 faces the transverse edge of the key bit. After again locking the cam in the new position attained, the lever 44 is operated so that the feeler 13 enters the key notch, and when it has touched the base of this the cutter unit 2 is again lowered so that the cutter 9 cuts a corresponding notch in the blank key.

If both transverse edges of the bit comprise notches, the lever 44 is operated to move the cross-table 20 in such a manner as to allow cutting of the notches in the other transverse edge of the key by the same method.

Finally, if the bit of the key to be duplicated also comprises longitudinal grooves on the bit surface or surfaces, after rotating the feeler 13 through 90° the lever 40 is operated so that each groove to be duplicated faces the major edge of the feeler 13. The cutter unit 2 is then lowered to make the feeler 13 slide along the base of the groove, so reproducing that groove on the bit of the blank key.

If a key longer than the maximum allowable length is to be duplicated, it is possible because of the particular arrangement of the two clamps 24 and 25 to use a pair of accessories, not shown on the drawings, but easily imaginable by the skilled man, and consisting essentially of a pair of extensions to fit to the cross-table 20 instead of the corresponding head locking elements 4, for supporting said head locking elements in a position further from the respective clamps 24 and 25.

From the aforegoing it is apparent that the duplicating machine according to the invention has considerable advantages over conventional duplicating machines, and in particular:
-it is of very simple construction, low cost, reliable operation and easy manoeuvrability;
-it allows the duplication of keys having notches in the longitudinal edge, in the transverse edges and also in the surfaces of the bit or bits;
-it enables curved notches to be cut in the longitudinal edge of the bit which have a radius of curvature equal to that of the original key, even if thes is less than the distance between said longitudinal edge and the shank axis;
-it enables both cutters, which are of different diameter, to always operate under optimum working conditions, so improving their efficiency, the quality of the cut and their life;
-it enables keys to be duplicated practically without any limit on their lengh.

## Claims

1. A key duplicating machine, particularly for bitted keys, comprising, for the original key and for the blank key respectively, two clamps mounted on a carriage mobile horizontally in all directions about a confronting cutter unit in which there are provided two feelers arranged to sense the notches present in the edges of the bit of the original key and two cutters arranged to reproduce these notches in the corresponding edges of the bit of the blank key, characterised by comprising a cross-table (20) on which the clamps (24, 25) for the two keys are mounted, this table being slidable along horizontal parallel guides (33) supported at their ends by two pairs of parallel connecting rods - (34) and being mobile horizontally in all directions under the control of a horizontal lever (44), and further characterised in that the cutter unit (2) is mobile vertically through a distance at least corresponding to the maximum vertical travel of said cross-table (20) in moving orthogonal to said parallel guides (33).

2. A duplicating machine as claimed in claim 1, characterised in that in the lower surface of the cross-table (20) there is provided a seat (36) for a substantially spherical element (37) mounted on an arm (38) and mobile in the two horizontal directions under the control of said lever (44).

3. A duplicating machine as claimed in claim 1, characterised in that the arm (38) is mounted radially on a shaft (39) which is mobile axially and rotatably under the control of said lever (44).

4. A duplicating machine as claimed in claim 1, characterised in that the cross-table (20) comprises at least one longitudinal guide (21) for a turret (23) mobile between two end positions, in correspondence with which the clamp (24) for the original key faces respectively the feeler (14) for the notches present in the longitudinal edge of the bit and the feeler (13) for the notches present in the transverse edges of the bit, and the clamp (25) for the blank key faces respectively the cutter (12) which rotates about an axis parallel to the axis of the key shank, and the cutter (9) which rotates about an axis orthogonal to the axis of said shank.

5. A duplicating machine as claimed in claim 4, characterised in that the turret (23) is provided with means (26, 27) for its locking along the guide slot - (21) of the cross-table (20).

6. A duplicating machine as claimed in claim 1, characterised in that the cutter unit (2) is mounted on a vertical column (5) and is mobile along this latter under the control of a system of levers (16, 17, 18) operable by the operator.

7. A duplicating machine as claimed in claim 1, characterised in that the two cutters (9,12) are of different diameter and are driven by a single motor (7), the shaft (8) of the smaller-diameter cutter (9) being directly coupled to the motor (7), and the shaft (11) of the larger-diameter cutter (12) being coupled to the motor (7) by way of a step-down gear unit having a ratio substantially equal to the ratio of the diameters of said cutters (9, 12).

8. A duplicating machine as claimed in claims 1 and 7, characterised in that the feeler (14) for the notches present in the longitudinal edge of the bit has that side facing the corresponding clamp (24) curved with a radius of curvature equal to the radius of the cutter (12).

9. A duplicating machine as claimed in claims 1 and 7, characterised in that the feeler (13) for the notches present in the transverse edges of the bit is of rectangular shape with its horizontal side equal to the diameter of the cutter (9).

10. A duplicating machine as claimed in claim 1, characterised in that the two clamps (24, 25) for the two keys (47, 48) are mounted on the cross-table (20) in two different horizontal planes and in two different longitudinal vertical planes.

11. A duplicating machine as claimed in claim 1, characterised in that with each clamp (24, 25) there is associated a head locking member (4) which engages the head of the respective key (47, 48).

12. A duplicating machine as claimed in claim 11, characterised by comprising an extension element to be interposed between the head locking member (4) and its support (23) in order to increase the distance of said locking member (4) from the corresponding clamp (24, 25).

FIG.1

0 234 568

FIG.2

FIG.3

FIG.4